# EUROPEAN PATENT APPLICATION

(11) **EP 4 726 623 A1**
(43) Date of publication of application: **15.04.2026**
(21) Application number: 24205948.3
(22) Date of filing: 10.10.2024
(51) Int. Cl.: G06Q 10/083, G06V 10/74, G06V 20/17, G06V 20/50, B64U 101/30, B64U 101/64

(54) **SAFE-DELIVERY SYSTEM AND METHODS FOR DRONES**

(71) Applicant: Waipack Tech, S.L., 17241 Quart (ES)
(72) Inventor: OYA CORNEJO, Raúl, 17241 Quart (ES); VEDOYA GARCÍA, Paulo Martxell, 17241 Quart (ES); GARCÍA CAMPOS, Rafael, 17241 Quart (ES)
(74) Representative: Isern Patentes y Marcas S.L.

(57) **Abstract**

The present invention relates to a computer-implemented method for establishing a safe-delivery score of a drone delivery system where at least one drone (10) has a camera (11), the method comprising:
receiving a delivery data, comprising a delivery location and at least one image of the delivery location (21);
determining the presence of the drone (10) within a defined vicinity (20) of the delivery location comparing the current location of the drone (10) with the delivery location;
receiving at least one image of the vicinity (22) of the delivery location and verifying the presence of the drone (10) in the vicinity of the delivery location comparing, using computer vision, the at least one image of the delivery location (21) with the at least one image of the vicinity (22); and
establishing a safe-delivery score using at least:
the level of certainty of the verification.

## Description

### Field of the invention

The present invention relates to a computer-implemented methods, a method, and a system for generating a safe-landing score.

### Background of the invention

It is known the use of drones for the delivery of packages or parcels by air or ground. Drones, in particular unmanned aerial vehicles (UAVs), show a high potential for delivering goods such as packages, parcels, medicines, foods, postal mails, and other light goods with a higher flexibility, security and speed than other traditional delivery modes such as trucks.

Large corporations like Amazon, DHL and FedEx have started to use drone delivery services.

The drone's structure includes the main components: motor, central processor, propeller, bracket, and power supply (battery).

Drones may be remote-controlled, semi-autonomous, or fully autonomous. Currently, the fully control technology is not completely developed and there are multiple challenges to overcome.

Recent innovations have taken place in drone-specific hardware, software and networks. For example, light composite materials and global positioning systems (GPS) allow a more efficient and automated flight. Furthermore, lithium batteries are rapidly improving so drones can fly further on a charge. Drone software can use mobile phone or tablet apps for tracking and navigation. Furthermore, drone operating systems can implement Internet of Things (IoT) applications, enabling solutions like monitoring weather data from ground stations or optimizing the routes of the drones.

In general, GPS drone delivery systems will determine the consumer's delivery location, travel to that location and deliver the correct package within the timeframe specified on each delivery date. Then, the customer or the receiving station will use an identifying method, such as a one-time password (OTP) provided during packet generation to avoid fraud and get the package.

However, drone delivery systems are not extent of risks and drawbacks.

Typical risks of drone delivery systems include the interception of parcels or packages intended for others, the delivery of unsolicited or unwanted packages or the delivery of the package or parcel to incorrect address.

Still further, the drone itself can be the target of sabotage, vandalism or theft while performing the delivery.

The prior art of drone delivery systems includes a variety of systems to try to overcome those risks and drawbacks. Some systems are based on receiving apparatus that include a housing or receptacle that protects against weather or manipulation.

The document US11825971 teaches a receptacle and a drone device with a camera that uses an optical code and a wireless verification code to make a delivery determination and cause the package to be positioned in the interior of the receptacle.

The document EP3089632 teaches a landing pad with a landing platform, a storage compartment, a receiver capable of recognizing a signal transmitted by an UAV and a trapdoor that exposes the interior of the storage compartment when a certain signal is received.

All those solutions have the disadvantage of having to install a device in each of the delivery locations. Further solutions are required to assess the safe delivery of packages or parcels, with cheaper and easy-to-implement solutions.

### Summary of the invention

In order to overcome these risks and drawbacks, according to one aspect of the invention, a computer-implemented method for establishing a safe-delivery score of a drone delivery system where at least one drone has a camera is disclosed according to claim 1.

In particular, this aspect of the invention relates to a computer-implemented method for establishing a safe-delivery score of a drone that is going to perform its final approximation to land, release its load and/or deliver its load.

Said computer-implemented method comprises:
receiving a delivery data, comprising a delivery location and at least one image of the delivery location;
receiving a drone data, comprising a current location;
characterized by also comprising the steps of,
determining the presence of the drone within a defined vicinity of the delivery location comparing the current location of the drone with the delivery location;
receiving at least one image of the vicinity of the delivery location from the drone's camera when the presence of the drone in the vicinity is determined;
verifying, with a level of certainty, the presence of the drone in the vicinity of the delivery location comparing, using computer vision, the at least one image of the delivery location with the at least one image of the vicinity; and
establishing a safe-delivery score using at least:
   the comparison between the delivery data and the drone data,
   the level of certainty of the verification

A drone delivery system comprises a group of devices, technologies, software and/or methods that combine to enable the transport of a load by drone from a pickup or loading point to a delivery point.

This aspect of the invention contemplates that computer-implemented method can be executed in a distributed manner, and does not rule out its execution by the drone's CPU, the drone operating system CPU or any other CPU that can be part of a delivery drone system.

This does not rule out any type of drone control system and this aspect of the invention can be integrated in drone delivery systems that are remote-controlled, semi-autonomous, or fully-autonomous.

In any event, an expert in the subject matter will be able to integrate this aspect of the invention in any drone delivery systems as will be explained later with the aid of the

### Examples.

In the context of the present disclosure, a location is a digital data encoding a geographic coordinate. Example of a location digital data are GPS coordinates or an address. This does not rule out any other type of location digital data and an expert in the field of delivery drone systems could easily transform a given location data (analogic or digital) into digital data interpretable by a delivery drone system. Example of technologies for acquiring location data are GPS, Starlink, GSM antenna triangulation or modem proximity signal. Determining the presence of the drone within a defined vicinity of the delivery location should be understood as the drone reaching the delivery location within the tolerance and error range of the navigation system used.

The definition of computer vision in the context of the present disclosure is a combination of algorithms concerned with the automatic extraction, analysis, and understanding of useful information from a single image or a sequence of images by one or a network of computers.

Inventively, the safe-delivery score can be used to overcome the errors or imprecisions committed by the navigation of drone delivery systems and the contingences that may occur during the delivery.

In particular, this aspect of the invention establishes a safe-delivery score that can be used, for example, to make a decision regarding landing, adjusting the delivery location, releasing the load or aborting the delivery.

The safe-delivery score uses a particular selection of variables, that include at least the comparison between the data received by the drone and the data of the delivery and, even more inventively, using the comparison of the at least one image of the delivery location submitted in the delivery data with the at least one image of the vicinity submitted by the drone while its presence is determined in the vicinity of the delivery location comparing the current location of the drone with the delivery location.

In a variant, comparing, using computer vision, the at least one image of the delivery location with the at least one image of the vicinity also comprises:
extracting distinctive invariant features from the at least one image of the delivery location and the at least one image of the vicinity;
finding the best matches between the invariant features of the at least one image of the delivery location and the at least one image of the vicinity;
calculating a projective homography between the at least one image of the delivery location and the at least one image of the vicinity;
alienate and register the at least one image of the delivery location and the at least one image of the vicinity using the projective homography; and
measuring the similarity between the alienated at least one image of the delivery location and the at least one image of the vicinity.

Distinctive invariant feature extractors can be visual appearance-based feature detection techniques, classifier-based feature detection techniques, feature descriptors, or some combination thereof. Examples of distinctive invariant features extractors include handcrafted features, for example, Harris corner detection, scale-invariant feature transform (SIFT), feature from accelerated segment test (FAST), speeded up robust features (SURF), binary robust independent elementary features (BRIEF), oriented FAST and rotated BRIEF (ORB), or any other interest point detectors and descriptors based on deep learning, such as SuperPoint, D2-Net, KeyNet, R2D2 (Reliable and Repeatable Detector and Descriptor), LF-Net (Learned Feature Network), and DISK (Discrete Keypoints).

This aspect of the invention contemplates the matching of those features across the images. The features can be matched utilizing the feature descriptors described above (either handcrafted or based on deep learning. Examples of visual appearance-based feature matching techniques include Brute-Force Matcher, Fast Library for Approximate Nearest Neighbors (FLANN), and SuperGlue. The matched features represent features that are in both the first image and the second image.

In another variant, comparing, using computer vision, the at least one image of the delivery location with the at least one image of the vicinity also comprises:
ensuring robustness of the matches and eliminate mismatches between the invariant features of the at least one image of the delivery location and the at least one image of the vicinity using random sample consensus algorithm (RANSAC).

In another variant, measuring the similarity between the alienated at least one image of the delivery location and the at least one image of the vicinity is done by using a Siamese neural network.

In another variant, receiving a delivery data also comprises a delivery time and receiving a drone data also comprises a real time data;

In another variant, the method also comprises:
Receiving at least one image of the load;
evaluating the status of the load using the at least one image of the load received; and
establishing a safe-delivery score using also the evaluation of the status of the load.

In another variant, the at least one image of the vicinity of the delivery location received is a video.

In another variant, the method also comprises:
analyzing received video of the vicinity of the delivery location for detecting intrusions in the delivery area; and
establishing a safe-delivery score using also the analysis for detecting intrusions.

In another aspect of the invention, a computer-implemented method for establishing a package delivery point for a drone delivery system where at least one drone has a camera is disclosed. The computer-implemented method comprising:
receiving a delivery data, comprising a delivery location and at least one image of the delivery location where the image of the delivery location comprises a delivery point;
receiving a drone data, comprising a current location;
characterized by also comprising the steps of,
   determining the presence of the drone within a defined vicinity of the delivery location comparing the current location of the drone with the delivery location;
   receiving an image of the defined vicinity of the delivery location using the drone's camera when the presence of the drone vicinity is determined;
   identifying the delivery point of the at least one image of the delivery location on the image of the defined vicinity of the delivery location comparing, using computer vision, the at least one image of the delivery location with the at least one image of the vicinity.

In another aspect of the invention, a method for safe delivering a load for a drone delivery system where at least one drone has a camera is disclosed. The method comprising: guiding a delivery drone from a starting location to a delivery location using a drone operating system;
executing the computer-implemented method for stablishing a safe-delivery score or/and establishing a package delivery point according to any one of the preceding claims; proceeding, adjusting or aborting the delivery of the load when the safe-delivery score is above a determined threshold or/and package delivery point is established.

In another aspect of the invention, drone delivery system for safe-delivery a load using drones is disclosed. The system comprising:
a drone comprising a camera;
a user interface where the user inputs data comprising at least one image of the delivery location;
a drone operating system comprising a processor for transmitting and receiving data of the user interface and the delivery drone; and
the drone operating system being configured to execute the method of the claim 10.

### Brief Description of the Drawings

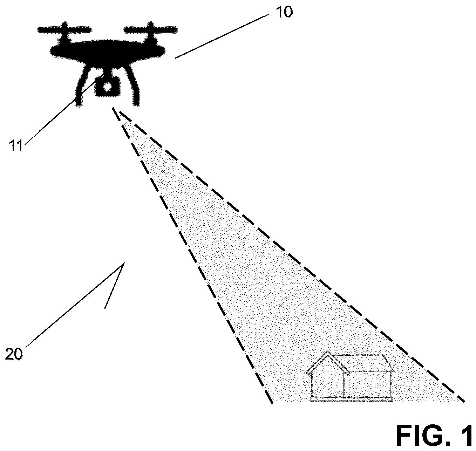

- Figure 1: Figure 1 schematically shows a drone (10) in the proximity of a delivery location.

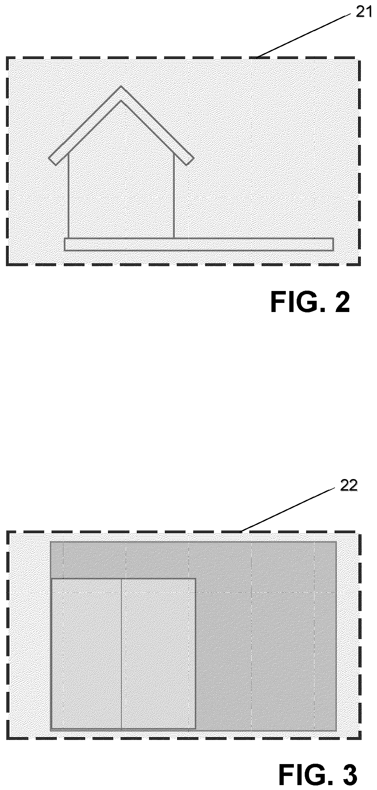

- Figure 2: Figure 2 schematically shows an image of the delivery location (21).
- Figure 3: Figure 3 schematically shows an image of the vicinity (22) of the delivery location taken by the drone's camera (11).

### Detailed Description of Preferred Embodiment(s)

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

The subject disclosure is directed to systems, computer-implemented methods, and/or methods that facilitate drone delivery and landing.

A drone delivery system consists of hardware, which comprises drones or other devices and software or methods, which allows the use of the hardware for the purpose of delivery loads.

The hardware of the drone delivery system consist of a drone, a load, a user device and a drone operating system.

In accordance with various exemplary embodiments, the drone is an aerial drone device configured to deliver packages via flight. However, in one or more additional embodiments, the drone device can also include a terrestrial drone device, a mobile robotic device (e.g., humanoid shaped, animal shaped, and/or any other suitable shape), and/or any combination thereof. The drone can include a propulsion system appropriate for the environments in which the drone device will operate, non-limiting examples of which include one or more propellers, one or more wings, one or more motors, one or more jet engines, one or more thrusters, one or more fins, one or more wheels, one or more continuous tracks, one or more buoyancy systems, one or more transmissions, one or more drivetrains, one or more arms, one or more legs and/or any other suitable propulsion components or systems.

The drone can include a power source, non-limiting examples of which include one or more batteries, one or more fuel cells, natural gas, compressed air, diesel fuel, gasoline, oil, propane, nuclear power system, solar power system, piezoelectric power system, and/or any other suitable power source. The drone can include one or more computers, one or more processors, one or more memories, and one or more programs. The drone can communicate via any suitable form of wireless or wired communication using a communication device. Non-limiting examples of wireless communication can include radio communication, optical communication, sonic communication, electromagnetic induction communication, and/or any other suitable wireless communication.

The drone can include one or more instruments, non-limiting examples of which include a communication device, a radio frequency identification (RFID) reader, navigation device, a sensor, a camera, a video camera, a three-dimensional camera, a global positioning system (GPS) device, a motion sensor, a radar device, a temperature sensor, a light sensor, a thermal imaging device, an infrared camera, an audio sensor, an ultrasound imaging device, a light detection and ranging (LIDAR) sensor, sound navigation and ranging (SONAR) device, a microwave sensor, a chemical sensor, a radiation sensor, an electromagnetic field sensor, a pressure sensor, a spectrum analyzer, a moisture sensor, a biohazard sensor, a gyroscope, an altimeter, a microscope, magnetometer, a device capable is seeing through or inside of objects, and/or any other suitable instruments.

The drone can be constructed out of any suitable material appropriate for environments in which the drone device will operate.

A drone can include a body made of a suitable material or combination of suitable materials (e.g., plastic, metal, etc.). The body can house various electrical components of the drone, such as a processor, memory, wireless communication circuitry, power circuitry, propulsion circuitry, and the like. The propulsion system of the drone includes four propellers in a quadcopter configuration; however, it should be appreciated that the drone can include any suitable number of propellers or any other suitable propulsion system. Drone also includes a camera and various other suitable components for navigation, such as an INS (Inertial Navigation Unit) or IMU (Inertial Measurement Unit), accelerometer, altimeter, barometer, LIDAR, radar, GPS, compass, gyroscope, and/or any other suitable components that can be implemented in a drone device.

The drone's flight board is responsible for transmitting information from the sensors to another device, in addition to receiving control commands and sending them to the propellers. In addition to the flight controller board already available on the drone, a Jetson Nano 2 is responsible for data processing, path planning, and the quadrotor high-level control.

The drone includes a package carrying apparatus. In one embodiment, the package carrying apparatus can include a rail system configured to removably attach to a package or object and carry the package or object in flight. The package carrying apparatus can be configured to grab or attach/detach from a package or object using a suitable attachment mechanism. Further, it should be appreciated that the drone devices described herein can be adapted to carry packages/objects of various shapes, sizes, material, and weights.

The user interface can be a device, web, app or any other method for the user to input delivery information. Some examples of delivery information that the user can input are: delivery desired time, address information and one or more photos of the desired landing zone for the delivered drone linked to the address information. The user interface can be part of other programs such as an e-commerce APP, a delivery management APP, etc.

Drone operating systems are the combination of software and methods that enable drones and the other devices involved in the delivery drone system to accomplish their goal of delivering a given load.

Drone operating systems can be divided into two main systems: real time monitoring system for ground control system purpose (RTMS-GCS) and real time monitoring system for UAV autonomous flight purpose (RTMS-onboard). Both systems communicate with an ONBOARD-GCS wireless connection.

### real time monitoring system for ground control system purpose (RTMS-GCS)

RTMS-GCS aims to provide operational and practical services suitable for the industries requiring the operation of multiple drones at the same. Some functionalities of the RTMS-GCS are:
Drone Management: Registers the drone on the system. By doing so, it grants a Flight ID to each drone, and uses the ID to distinguish upon monitoring. It also recognizes various capabilities of each individual drone upon allocation to assign optimal tasks for each drone.

Order Management: Generates the missions for the drones. It generates delivery items data through the Order Management System, OMS, or by direct input. In this section, ordered items with their weight and volume are defined. Sometimes, orders with more than one item might be placed from one target location regardless of the drone's maximum payload in weight.

Area Management: Sets the inaccessible areas for drone flying. When there is a restricted airspace or densely populated area, it restricts the flight crossing such area.

Mission Assignment: The mission is assigned to each drone and the flight path is established. The system identifies the purposes, specifications, and status of each registered drone, and allocates proper assignments to each of them. Also, it sets the flight paths of the particular mission, in coordination with the Area Management. Moreover, RTMS-GCS can provide the acceptable solution of routing procedure for each mission by considering the distances of orders and over weighted item orders by sharing the order items with multiple drones.

Mission Approval: It makes an inquiry about the drone with designated mission and flight path, and decides whether it approves or rejects such mission. This functionality will be useful when it is integrated with the weather information services or the emergency missions generate, in the prospective research.

Real-Time drone Tracking: It traces the status and location data collected through the sensors in real-time, while a drone is executing the mission. It differs from the commercialized GCS such as the capability of checking the status of multiple drones at the same time.

Dynamic control to drone: It performs an emergency control upon the operator's judgment or whenever it detects an adverse response while tracking the drone. It should take other drone's flight paths and surrounding circumstances into account, and the operator's authorization is necessary to perform the emergency control.

Report/History data management: It performs the management of mission data and historical data of drone status. It could be used in various situations by analyzing the maintenance history, as well as mission history data.

### Time monitoring system for UAV autonomous flight (RTMS-ONBOARD)

The sensor input data and appropriate onboard algorithms are used to measure the state estimations/positions. These states are calculated in the flight PID controller. The output results in a suitable control movement (e.g. pitch, yaw and roll) to the drones. As a result, the drone can be aware of the environment and sustain itself as there might be nonguaranteed situations of communication to the ground control

During the flight time, drone needs to make decisions for itself to sustain in the dynamically changing environment such as extreme weathers or insufficient energy or any damage happened in the aircraft component. Sometimes auto landing is forced in unknown terrain by finding a safe landing area itself. Important autonomous-flight maneuver for the RTMS should cover the take-off, landing, path following/navigation, obstacle avoidance and environment awareness. To reduce the processing workload of onboard drone for collision avoidance, RTMS-GCS can provide a tentative schedule to avoid the static objects (i.e. high buildings, restricted areas in our targeted drone delivery area) before the actual flight [5]. In such schedule, specific waypoints with specific altitudes are defined to ensure the safe drone mission.

### RTMS ONBOARD-GCS connection

The RTMS ONBOARD-GCS systems share data through wireless connection. The real time data processing is done by using uplink and downlink between the ONBOARD and the GCS. Ground station receives the data from onboard as a downlink, calculate downlink data in the algorithm/program to inform the current status of drone. When drone encounters dynamically frequent changes during mission which are uncovered by onboard drone decision making system, uplink command from the GCS can communicate and control the drone. Telemetry and avionic data are transmitted from drone to ground station for the tracking and monitoring purpose. Detail information related to delivery items such as item description, expired date, manufactured date are registered from outside resources of RTMS which are matched to the relevant mission of drone and saved in database layer for long term analysis purpose.

### Safe-Delivery Score

The invention proposes that as part of the drone operating system, a safe-delivery score is used as an input data to make decisions regarding the landing or delivery of the load.

The invention contemplates that the safe-delivery score can be used in the dynamic control of the drone as part of the ground control system for providing, upon the operator's judgment, the delivery of release the load.

The invention contemplates that the Safe-Delivery Score can be used in the RTMS-ONBOARD system as an input for the drone to make the decision for itself to deliver or release the load or abort the operation.

The invention contemplates the use of different inputs to calculate the safe-delivery score.

One of the main purposes of the safe-delivery score is reduce the positioning errors made by the navigation systems. For this purpose, the drone takes a photo when flies over the delivery point. This photo is compared with a photo of the delivery zone taken by the user, upload through the user interface in an APP and integrated in the mission assignment by the ground control system.

To determine whether the two images have common areas, a detection of points of interest between the two images is performed using the SIFT feature detector and descriptor, or any other feature descriptor.

Once the points of interest have been detected, the method proceeds to the matching of these points using Euclidean distance or matching algorithms such as FLANN.

Subsequently, to ensure the robustness of the matching and to eliminate erroneous correspondences, the RANSAC (Random Sample Consensus) algorithm is used to eliminate incorrect correspondences using projective homography as the model.

Finally, to identify an accurate geometric transformation between the two images, a projective homography is calculated using the matches that have passed the RANSAC test.

This homography allows the alignment and registration of images captured from different perspectives. Once the homography has been applied, a final test is performed that measures the similarity of the two images using a Siamese neural network, which allows detecting if the two images are similar, thus ensuring that the area marked by the user matches correctly in both images, to confirm the landing zone of the drone.

The delivery data and the drone data compared to establish the safe-delivery score can comprise drone data like accelerometer data, gyroscope data, pressure data, compass data, GPS data, air speed data sensor, battery sensor; and delivery data like delivery address, delivery coordinates, order data, area data, load data and information provided for the costumer like IDs, identification codes etc.

The drone's camera start recording a video of delivery when it arrives to the destination area. The video can be analyzed for detecting intrusions in the area caused by animals, unauthorized persons or other moving elements in the delivery zone. This analysis can be used to establish the safe-delivery score.

## Claims

1. A computer-implemented method for establishing a safe-delivery score of a drone delivery system where at least one drone (10) has a camera (11), the method comprising:
receiving a delivery data, comprising a delivery location and at least one image of the delivery location (21);
receiving a drone data, comprising a current location;
**characterized by** also comprising the steps of,
determining the presence of the drone (10) within a defined vicinity (20) of the delivery location comparing the current location of the drone (10) with the delivery location;
receiving at least one image of the vicinity (22) of the delivery location from the drone's camera (11) when the presence of the drone in the vicinity is determined;
verifying, with a level of certainty, the presence of the drone (10) in the vicinity of the delivery location comparing, using computer vision, the at least one image of the delivery location (21) with the at least one image of the vicinity (22); and
establishing a safe-delivery score using at least:
the comparison between the delivery data and the drone data,
the level of certainty of the verification.

2. The computer-implemented method according to any one of the preceding claims, **characterized in that**:
receiving a delivery data also comprises a delivery time;
receiving a drone data also comprises a real-time data;

3. The computer-implemented method according to any one of the preceding claims, **characterized in that** the method also comprises:
Receiving at least one image of the load;
evaluating the status of the load using the at least one image of the load received; and
establishing a safe-delivery score using also the evaluation of the status of the load.

4. The computer-implemented method according to any one of the preceding claims, **characterized in that** the at least one image of the vicinity (22) of the delivery location received is a video.

5. The computer-implemented method according to the preceding claim, **characterized in that** the method also comprises:
analyzing received video of the vicinity of the delivery location for detecting intrusions in the delivery area; and
establishing a safe-delivery score using also the analysis for detecting intrusions.

6. A computer-implemented method for establishing a package delivery point for a drone delivery system where at least one drone (10) has a camera (11), the method comprising:
receiving a delivery data, comprising a delivery location and at least one image of the delivery location (21) where the image of the delivery location (21) comprises a delivery point;
receiving a drone data, comprising a current location;
**characterized by** also comprising the steps of,
determining the presence of the drone (10) within a defined vicinity (20) of the delivery location comparing the current location of the drone (10) with the delivery location;
receiving an image of the defined vicinity of the delivery location using the drone's camera when the presence of the drone in the vicinity is determined;
identifying the delivery point of the at least one image of the delivery location (21) on the image of the defined vicinity of the delivery location comparing, using computer vision, the at least one image of the delivery location (21) with the at least one image of the vicinity (22).

7. The computer-implemented method according to any one of the preceding claims **characterized in that**, comparing, using computer vision, the at least one image of the delivery location (21) with the at least one image of the vicinity (22) comprises:
extracting distinctive invariant features from the at least one image of the delivery location (21) and the at least one image of the vicinity (22);
finding the best matches between the invariant features of the at least one image of the delivery location (21) and the at least one image of the vicinity (22);
calculating a projective homography between the at least one image of the delivery location (21) and the at least one image of the vicinity (22);
alienate and register the at least one image of the delivery location (21) and the at least one image of the vicinity (22) using the projective homography; and measuring the similarity between the alienated at least one image of the delivery location (21) and the at least one image of the vicinity (22).

8. The computer-implemented method according to the preceding claim **characterized in that**, comparing, using computer vision, the at least one image of the delivery location (21) with the at least one image of the vicinity (22) also comprises:
ensuring robustness of the matches and eliminate mismatches between the invariant features of the at least one image of the delivery location (21) and the at least one image of the vicinity (22) using random sample consensus (RANSAC).

9. The computer-implemented method according to the claims 7 or 8 **characterized in that**, measuring the similarity between the alienated at least one image of the delivery location (21) and the at least one image of the vicinity (22) is done by using a Siamese neural network.

10. A method for safe delivering a load for a drone delivery system where at least one drone (10) has a camera (11), the method comprising:
guiding a drone (10) from a starting location to a delivery location using a drone operating system;
executing the computer-implemented method for establishing a safe-delivery score or/and establishing a package delivery point according to any one of the preceding claims;
proceeding, adjusting or aborting the delivery of the load when the safe-delivery score is above a determined threshold or/and package delivery point is established.

11. A drone delivery system for safe-delivery a load using drones (10') comprising:
A drone (10) comprising a camera;
a user interface where the user inputs data comprising at least one image of the delivery location (21);
a drone operating system comprising a processor for transmitting and receiving data of the user interface and the drone (10); and
the drone operating system being configured to execute the method of the claim 10.
